# EUROPÄISCHE PATENTSCHRIFT

(11) **EP 0 439 159 B1**
(45) Veröffentlichungstag und Bekanntmachung des Hinweises auf die Patenterteilung: **06.04.1994**
(21) Anmeldenummer: 91100875.3
(22) Anmeldetag: 24.01.1991
(51) Int. Cl.: B60H 1/24

(54) **Rückluftsperre**
Non-return air valve
Clapet anti-retour d'air

(30) Priorität: 24.01.1990 DE 4002052
(43) Veröffentlichungstag der Anmeldung: 31.07.1991
(73) Patentinhaber: TRW United-Carr GmbH & Co. KG, D-67677 Enkenbach-Alsenborn (DE)
(72) Erfinder: Kraus, Willibald, W-6718 Grünstadt (DE)
(74) Vertreter: Schieschke, Klaus, Dipl.-Ing.

(56) Entgegenhaltungen:
- EP-A- 0 154 140
- DE-U- 8 902 504
- US-A- 4 691 623

## Beschreibung

Die Erfindung betrifft eine Rückluftsperre für eine Einrichtung zur Entlüftung des Innenraumes eines Kraftfahrzeuges mit einem Außengehäuse, an welchem über mindestens eine Klemmverbindung ein Innenrahmen befestigt ist, wobei zwischen Außengehäuse und Innenrahmen mindestens eine Abschlußklappe aus biegsamen, weichen Material über Klemm-Mittel angeordnet ist, welche durch ihr Eigengewicht gegen ein schräges Gitter und bei einer Luftströmung gegen Stege anliegt.

Es zählt bereits zum allgemein bekannten Stand der Technik, eine aus Außengehäuse, Innenrahmen und Abschlußklappen bestehende Rückluftsperre so auszubilden, daß das Außengehäuse und der Innenrahmen schachtelartig ineinander gesteckt werden, wobei beide Elemente über Clipverbindungen miteinander verbunden sind. Die Clipverbindungen des Innenrahmens dienen dann gleichzeitig zur Befestigung der gesamten Einheit in einer Trägeröffnung.

Als Stand der Technik ist es weiterhin bekannt (DE-U-8902504.0), eine Rückluftsperre so auszubilden, daß sie aus einem einteiligen Kunststoffgehäuse besteht. In diesem Gehäuse sind Öffnungen und schrägstehende Gitter vorgesehen, gegen die sich hängend angeordnete Abschlußklappen anlegen. Hinter jeder Abschlußklappe befindet sich in deren Bewegungsbereich ein Steg, an welchem sich bei entsprechendem Luftstrom die Abschlußklappen anlegen, wodurch ein Flattern der Abschlußklappen und Flattergeräusche vermieden werden. Aus dieser bekannten Konstruktion geht nicht hervor, wie die Abschlußklappen funktionssicher oberseitig der jeweiligen Öffnungen des Gehäuses zu befestigen sind.

Zum Stand der Technik zählt darüber hinaus eine Rückluftsperre für Kraftfahrzeuge, welche so gestaltet ist, daß zur Unterbindung von Flattergeräuschen mehrere hakenartige Stege derartig angebracht sind, daß in der Höhenlage, in welcher das Flattern beginnt, die Abschlußklappe das freie Ende mindestens eines Steges berührt (DE-A-37 09 244). Mit zunehmender Luftgeschwindigkeit knickt die Abschlußklappe im unteren Randbereich ein, schmiegt sich an die Stege an und wird in Winkelform gehalten. Über einen Flansch wird die Rückluftsperre unter Zwischenlage eines Dichtrings, beispielsweise mittels Klebstoff an einem Träger befestigt. Damit ist bei dieser bekannten Konstruktion eine Demontage nur sehr schwer möglich, wobei außerdem die hakenartigen Stege der gesamten Einheit nur eine ungenügende Stabilität verleihen.

Weiterhin ist eine Karosserie für ein Kraftfahrzeug bekannt, welche Entlüftungsschlitze aufweist mit nach außen herausgebogenen Lappen und entsprechenden hakenartigen Anlageflächen (DE-A-32 40 291). Diese bekannte Konstruktion ist damit integrierender Bestandteil einer Karosse eines Kraftfahrzeuges und kann nicht als vormontierte Einheit an einem Kraftfahrzeug angebracht werden.

Demgegenüber liegt der vorliegenden Erfindung die Aufgabe zugrunde, eine Rückluftsperre der eingangs genannten Art so zu gestalten, daß auf einfache Weise eine schnelle und kostensparende Montage unter vollem Beibehalt der Funktionssicherheit gegeben ist.

Diese Aufgabe wird erfindungsgemäß dadurch gelöst, daß der Innenrahmen vorderseitig in das Außengehäuse eingesetzt ist und daß die aus Innenrahmen, Außengehäuse und Abschlußklappen bestehende Einheit an einem Träger des Kraftfahrzeuges durch mindestens eine an dem Außengehäuse angeordnete Clipverbindung befestigt ist. Hierdurch ergibt sich der Vorteil, daß das stabile Außengehäuse für die Befestigung der gesamten Einheit in einer Trägeröffnung herangezogen wird und damit der Innenrahmen baulich leichter ist.

Der Innenrahmen weist in weiterer Ausgestaltung der Erfindung einen umlaufenden Rand mit querverlaufenden Rippen auf, an welchen die durchgehend ausgebildeten Stege angeordnet sind, wobei die Stege durch einen umlaufenden Rahmen miteinander verbunden werden. Es ergibt sich hiermit eine stabile Einheit des Innenrahmens, da durch die entsprechenden Stege zwei im Abstand voneinander liegende Bereiche des Innenrahmens miteinander verbunden sind.

Nach einem weiteren Merkmal der Erfindung ist das schräge Gitter an dem Außengehäuse angeordnet, wobei die Stirnfläche des umlaufenden Rahmens des Innenrahmens und ein Abschlußbereich des schrägen Gitters die Klemm-Mittel für die Abschlußklappe bilden. Hierbei weist die Stirnfläche des umlaufenden Rahmens des Innenrahmens im Abstand voneinander angeordnete Zapfen auf, welche im eingebauten Zustand den Randbereich der Abschlußklappe durchdringen und in Ausnehmungen des Abschlußbereichs des schrägen Gitters des Außengehäuses eingelagert sind. Damit werden die Randbereiche der elastischen Abschlußklappen zwischen dem Innenrahmen und dem Außengehäuse in funktionssicherer Weise befestigt, wobei infolge der Zapfen eine Unverschiebbarkeit gewährleistet ist.

In weiterer Ausgestaltung der Erfindung weist das Außengehäuse einen umlaufenden Rand mit der Klemmverbindung zur Befestigung an Gegenelementen des umlaufenden Randes des Innenrahmens auf. Damit läßt sich, wie vorstehend ausgeführt, das Außengehäuse mit dem Innenrahmen als vormontierte Einheit an dem entsprechenden Träger des Kraftfahrzeuges befestigen. Weiterhin weist das Außengehäuse an den umlaufenden Rand anschließend eine umlaufende Wand auf, an welcher endseitig das schräge Gitter angeformt ist. Die Oberseite der umlaufenden Wand ist mit mindestens einer gegen den Träger gerichteten Federzunge als Clipverbindung versehen, so daß die vorerwähnte vormontierte Einheit von einer Seite in eine entsprechend geformte Öffnung eines Trägers des Kraftfahrzeuges eingebracht werden kann. Hierbei ist mindestens eine Federzunge der Rückluftsperre in einem taschenartigen Bereich der umlaufenden Wand angeordnet. Darüberhinaus weist der umlaufende Rand des Außengehäuses in weiterer Ausgestaltung der Erfindung eine gegen die Federzungen gerichtete umlaufende Nut zur Aufnahme einer eingeschäumten PU-Dichtung auf.

Eine weitere Ausführungsform sieht vor, daß die Federzunge an einem Verriegelungselement angeordnet ist, welches seinerseits mit dem Außengehäuse verbunden werden kann.

Die Erfindung wird nachfolgend anhand von in der Zeichnung dargestellten Ausführungsbeispielen näher beschrieben. In der Zeichnung zeigen:
- Fig. 1: einen Querschnitt durch die erfindungsgemäße Rückluftsperre im eingebauten Zustand,
- Fig. 2: eine Vorderansicht des Innenrahmens,
- Fig. 3: eine Draufsicht auf den Innenrahmen,
- Fig. 4: Schnitt IV-IV in Fig. 2,
- Fig. 5: eine vergrößerte Ansicht des Befestigungsbereiches für die elastischen Abschlußklappen,
- Fig. 6: eine Schnittansicht eines Teils des Außengehäuses und des Innenrahmens, teils gebrochen,
- Fig. 7: eine Draufsicht auf die Ausführungsformen nach Fig. 6,
- Fig. 8: einen Schnitt nach der Linie VIII - VIII in Fig. 7,
- Fig. 9: eine weitere Ausführungsform der Erfindung gemäß dem Schnitt IX - IX in Fig. 10,
- Fig. 10: eine Draufsicht auf die andere Ausführungsform nach Fig. 9,
- Fig. 11: einen Schnitt gemäß der Linie XI - XI in Fig. 10.

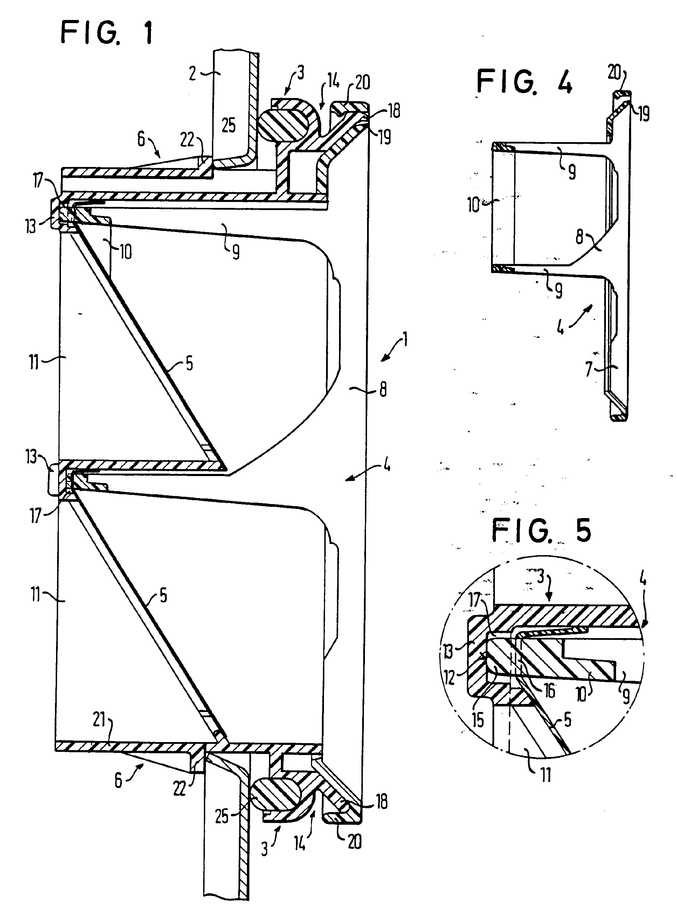

Eine in Fig. 1 dargestellte Rückluftsperre 1 für eine Einrichtung zur Entlüftung des Innenraumes eines Kraftfahrzeuges besteht im wesentlichen aus einem stabilen Außengehäuse 3, an welchem über mindestens eine Klemmverbindung 18/19 ein dünner Innenrahmen 4 befestigt ist. Zwischen dem Außengehäuse 3 und den Innenrahmen 4 befinden sich übereinander angeordnet Abschlußklappen 5 aus biegsamen, weichen Material, welche über Klemm-Mittel im Abschlußbereich 13 zwischen dem Außengehäuse 3 und dem Innenrahmen 4 befestigt sind. Diese Abschlußklappen 5 liegen durch ihr Eigengewicht gegen ein schräges Gitter 11 des Außengehäuses 3 und bei einer Luftströmung gegen Stege 9 des Innenrahmens 4 an.

Wie aus Fig. 1 ersichtlich, ist der Innenrahmen 4 vorderseitig in das Außengehäuse 3 eingesetzt, wobei die aus Innenrahmen 4, Außengehäuse 3 und Abschlußklappen 5 bestehende Einheit an einem Träger 2 eines nicht näher dargestellten Kraftfahrzeuges durch mindestens eine an dem Außengehäuse 3 angeordnete Clipverbindung 6 befestigt ist.

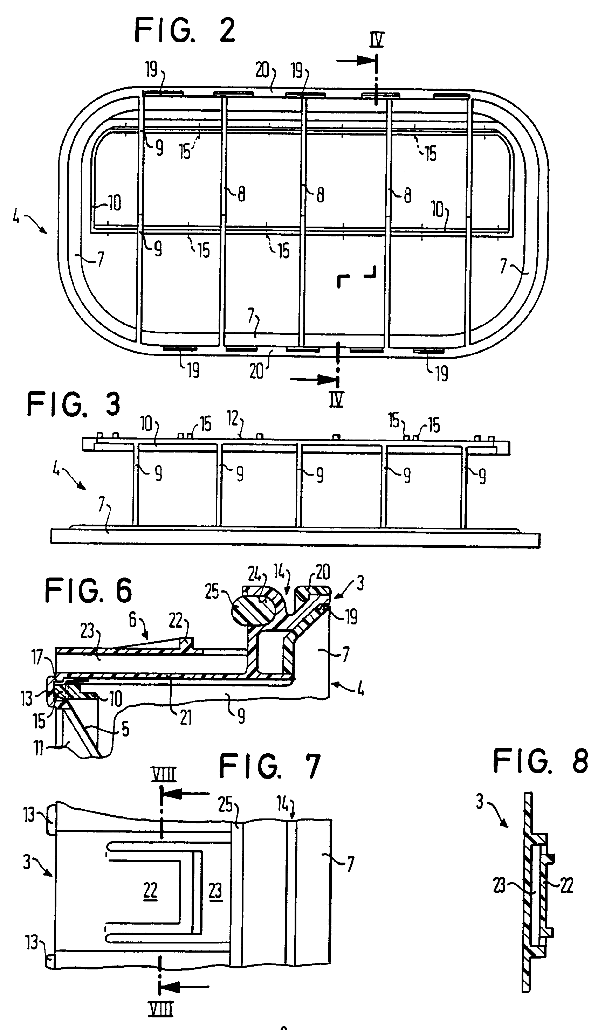

Aus Fig. 2, 3 und 4 geht hervor, daß der Innenrahmen 4 einen umlaufenden Rand 7 mit querverlaufenden Rippen 8 aufweist, an welchen durchgehend ausgebildete Stege 9 angeordnet sind. Diese Stege 9 sind durch einen umlaufenden Rahmen 10 miteinander verbunden. Damit ergibt sich trotz des dünnen Innenrahmens 4 insgesamt eine stabile Baueinheit.

Die Stirnflächen 12 des umlaufenden Rahmens 10 des Innenrahmens 4 weisen im Abstand voneinander angeordnete Zapfen 15 nach Fig. 2 und 3 auf. Diese Zapfen 15 durchdringen im eingebauten Zustand nach Fig. 4 und 5 einen Randbereich 16 der Abschlußklappen 5 und sind in Ausnehmungen 17 eines Abschlußbereiches 13 des schrägen Gitters 11 des Außengehäuses 3 eingelagert.

Das Außengehäuse 3 seinerseits weist einen umlaufenden Rand 14 mit einer Klemmverbindung 18 nach Fig. 1 und 6 zur Befestigung an Gegenelementen 19 des umlaufenden Randes 20 des Innenrahmens 4 auf. Klemmverbindung 18 und Gegenelemente 19 sind so gestaltet, daß das Außengehäuse 3 Zungen besitzt, welche sich in taschenartigen, mit einer Verriegelungskante versehen Ausnehmungen des Innenrahmens 4 einlagern. Weiterhin ist aus Fig. 1 ersichtlich, daß das schräge Gitter 11 an dem Außengehäuse 3 angeordnet ist, wobei die Stirnfläche 12 des umlaufenden Rahmens 10 des Innenrahmens 4, wie vorstehend ausgeführt, und ein Abschlußbereich 13 des schrägen Gitters 11 die Klemm-Mittel für die Abschlußklappe bilden.

Das Außengehäuse weist nach Fig. 1 und 6 darüberhinaus an dem umlaufenden Rand anschließend eine umlaufende Wand 21 auf, an welcher endseitig das schräge Gitter 11 angeformt ist. Hierbei ist die Oberseite der umlaufenden Wand 21 mit mindestens einer gegen den Träger 2 gerichteten Federzunge 22 als Clipverbindung versehen. Aus Fig. 7 und 8 geht hervor, daß mindestens eine Federzunge 22 in einem taschenartigen Bereich 23 der umlaufenden Wand 21 angeordnet ist. Damit kann diese Federzunge 22 frei schwingen und sich entsprechend an der benachbarten Wandung des Trägers 2 nach Fig. 1 anlegen, ohne daß eine Mitwirkung des Innenrahmens 4 erforderlich ist. Damit ließe sich z.B. das Außengehäuse 3 allein an einer Trägeröffnung befestigen. Weiterhin ist aus Fig. 1 und 6 ersichtlich, daß der umlaufende Rand 14 des Außengehäuses 3 eine gegen die Federzungen 22 gerichtete umlaufende Nut 24 zur Aufnahme einer eingeschäumten PU-Dichtung 25 aufweist.

Die gesamte Einheit, Rückluftsperre 1, bestehend aus Außengehäuse 3, Innenrahmen 4 sowie Abschlußklappen 5, wird vormontiert, wobei der in Fig. 5 dargestellte Randbereich 16 der elastischen Abschlußklappen 5 von Zapfen 15 des Innenrahmens 4 durchdrungen wird, und sich diese Zapfen 15 in Ausnehmungen 17 eines Abschlußbereiches 13 des Außengehäuses 3 einlagern. Damit sind die elastischen Abschlußklappen sicher zwischen dem Innenrahmen 4 und dem Außengehäuse 3 eingeklemmt und liegen, wie aus Fig. 1 ersichtlich, gegen die entsprechenden Elemente des schrägen Gitters 11 des Außengehäuses 3 an. Diese so vormontierte Baueinheit wird nun gemäß Fig. 1 von rechts nach links in eine entsprechende Öffnung eines Trägers 2 eines Kraftfahrzeuges eingeschoben, wobei die Clipverbindungen 6, das heißt die Federzungen 22 des stabilen Außengehäuses 3 über die entsprechenden Schrägen zurückfedern und zwar so lange, bis sie nach Fig. 1 an der entsprechenden Wandung des Trägers 2 in eingeschnapptem Zustand anliegen. In diesem Zustand beaufschlagt die PU-Dichtung 25 die andere Wandung des Trägers 2, so daß insgesamt eine gute Abdichtung gegeben ist.

Dadurch, daß das Außengehäuse 3 die Halterung der gesamten Einheit an einer Öffnung eines Trägers 2 eines Kraftfahrzeuges gewährleistet, ergibt sich eine kostensparende Gestaltung der gesamten Rückluftsperre 1.

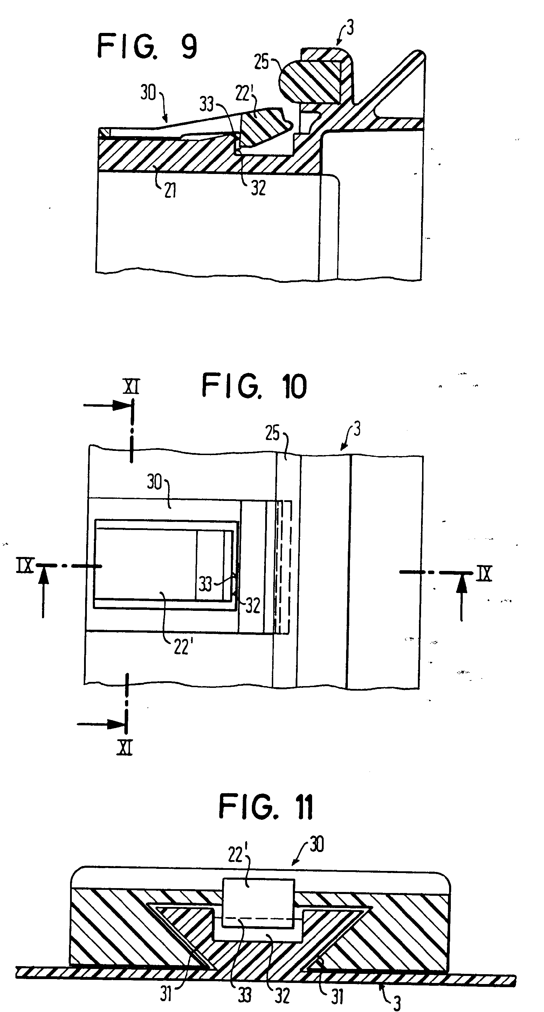

Gemäß einem weiteren Ausführungsbeispiel der Erfindung besteht nach Fig. 9 bis 11 auch die Möglichkeit, daß die Federzunge 22' getrennt vom Außengehäuse 3 ausgebildet ist. Hierzu kann die Federzunge 22' an einem mit dem Außengehäuse 3 verbindbaren Verriegelungselement 30 angeordnet sein. Dieses Verriegelungselement 30 ist über eine in Fig. 11 dargestellte Schwalbenschwanzführung 31 an der Außenfläche des Außengehäuses 3 geführt, und zwar im Bereich der umlaufenden Wand 21.

Weiterhin kann das Verriegelungselement 30 eine eine Arretierfläche 32 des Außengehäuses 3 hintergreifende Eingriffskante 33 aufweisen, welche an der Federzunge angeordnet ist. Aus Fig. 10 geht darüberhinaus hervor, daß die Federzunge 22' im mittleren Bereich des Verriegelungselements 30 zwischen den Flächen der Schwalbenschwanzführung 31 liegt. Dieses Verriegelungselement wird über die Schwalbenschwanzführung auf die Wand 21 auf die Außenfläche des Außengehäuses 3 eingeschoben, bis nach Fig. 9 die Eingriffskante 33, welche im Bereich der Federzunge 22' liegt, eine Arretierfläche 32 des Außengehäuses 3 hintergreift. Damit ist das Verriegelungselement 30 auf der umlaufenden Wand 21 des Außengehäuses 3 gesichert. Wird nunmehr diese Einheit an einer Wand gemäß Fig. 1 montiert, so kann der vordere Bereich der federnden Zunge 22' analog der Bauform nach Fig. 1 einen Träger 2 beaufschlagen, sodaß auch bei dieser Bauform auf einfache Weise eine funktionssichere Befestigung der gesamten Einheit an einem Träger 2 gewährleistet ist.

## Patentansprüche

1. Rückluftsperre für eine Einrichtung zur Entlüftung des Innenraumes eines Kraftfahrzeuges, mit einem Außengehäuse (3), an welchem über mindestens eine Klemmverbindung (18) ein Innenrahmen (4) befestigt ist, wobei zwischen Außengehäuse (3) und Innenrahmen (4) mindestens eine Abschlußklappe (5) aus biegsamen, weichen Material über Klemm-Mittel angeordnet ist, welche durch ihr Eigengewicht gegen ein schräges Gitter (11) und bei einer Luftströmung gegen Stege (9) anliegt, dadurch gekennzeichnet,
daß der Innenrahmen (4) vorderseitig in das Außengehäuse (3) eingesetzt ist und daß die aus Innenrahmen (4), Außengehäuse (3) und Abschlußklappen (5) bestehende Einheit an einem Träger (2) des Kraftfahrzeuges durch mindestens eine an dem Außengehäuse (3) angeordnete Clipverbindung (6) befestigt ist.

2. Rückluftsperre nach Anspruch 1, dadurch gekennzeichnet, daß der Innenrahmen (4) einen umlaufenden Rand (7) mit querverlaufenden Rippen (8) aufweist, an welchen die durchgehend ausgebildeten Stege (9) angeordnet sind, wobei die Stege (9) durch einen umlaufenden Rahmen (10) miteinander verbunden sind.

3. Rückluftsperre nach Anspruch 1 und 2, dadurch gekennzeichnet, daß das schräge Gitter (11) an dem Außengehäuse (3) angeordnet ist, wobei die Stirnfläche (12) des umlaufenden Rahmens (10) des Innenrahmens (4) und ein Abschlußbereich (13) des schrägen Gitters (11) die Klemm-Mittel für die Abschlußklappe (5) bildet.

4. Rückluftsperre nach Anspruch 3, dadurch gekennzeichnet, daß die Stirnflächen (12) des umlaufenden Rahmens (10) des Innenrahmens (4) im Abstand voneinander angeordnete Zapfen (15) aufweist, welche im eingebauten Zustand den Randbereich (16) der Abschlußklappe (5) durchdringen und in Ausnehmungen (17) des Abschlußbereichs (13) des schrägen Gitters (11) des Außengehäuses (3) eingelagert sind.

5. Rückluftsperre nach Anspruch 1 bis 3, dadurch gekennzeichnet, daß das Außengehäuse (3) einen umlaufenden Rand (14) mit der Klemmverbindung (18) zur Befestigung an Gegenelementen (19) des umlaufenden Randes (20) des Innenrahmens (4) aufweist.

6. Rückluftsperre nach einem der vorhergehenden Ansprüche, dadurch gekennzeichnet, daß das Außengehäuse (3), an den umlaufenden Rand (14) anschließend, eine umlaufende Wand (21) aufweist, an welcher endseitig das schräge Gitter (11) angeformt ist.

7. Rückluftsperre nach Anspruch 1 und 6, dadurch gekennzeichnet, daß die Oberseite der umlaufenden Wand (21) mit mindestens einer gegen den Träger (2) gerichteten Federzunge (22, 22') als Clipverbindung (6) versehen ist.

8. Rückluftsperre nach Anspruch 7, dadurch gekennzeichnet, daß mindestens eine Federzunge (22) in einem taschenartigen Bereich (23) der umlaufenden Wand (21) angeordnet ist.

9. Rückluftsperre nach einem der vorhergehenden Ansprüche, dadurch gekennzeichnet, daß der umlaufende Rand (14) des Außengehäuses (3) eine gegen die Federzungen (22) gerichtete, umlaufende Nut (24) zur Aufnahme einer eingeschäumten PU-Dichtung (25) aufweist.

10. Rückluftsperre nach Anspruch 1, dadurch gekennzeichnet, daß die Federzunge (22') getrennt vom Außengehäuse (3) ausgebildet ist.

11. Rückluftsperre nach Anspruch 10, dadurch gekennzeichnet, daß die Federzunge (22') an einem mit dem Außengehäuse (3) verbindbaren Verriegelungselement (30) angeordnet ist.

12. Rückluftsperre nach Anspruch 10 und 11, dadurch gekennzeichnet, daß das Verriegelungselement (30) über eine Schwalbenschwanzführung (31) an der Außenfläche des Außengehäuses (30) geführt ist.

13. Rückluftsperre nach Anspruch 11 und 12, dadurch gekennzeichnet, daß das Verriegelungselement (30) eine eine Arretierfläche (32) des Außengehäuses (3) hintergreifende Eingriffskante (33) aufweist, welche an der Federzunge (22') angeordnet ist.

14. Rückluftsperre nach einem der Ansprüche 10 bis 13, dadurch gekennzeichnet, daß die Federzunge (22') im mittleren Bereich des Verriegelungselements (30) zwischen den Flächen der Schwalbenschwanzführung (31) liegt.

## Claims

1. Non-return air valve for a device for deventilat-ing the interior of a motor vehicle, with an outer housing (3), to which an inner frame (4) is fastened by at least one clamping connection (18), at least one closing flap (5) made of flexible soft material being arranged by a clamping means between the outer housing (3) and inner frame (4), which closing flap (5) bears as a result of its own weight against an oblique grating (11) and, in the event of an air flow, against webs (9), characterized in that the inner frame (4) is inserted at the front into the outer housing (3), and in that the unit consisting of inner frame (4), outer housing (3) and closing flaps (5) is fastened to a support (2) of the motor vehicle by at least one snap connection (6) arranged on the outer housing (3).

2. Non-return air valve according to Claim 1, characterized in that the inner frame (4) has a peripheral edge (7) with transversely extending ribs (8), on which the webs (9) made continuous are arranged, the webs (9) being connected to one another by means of a peripheral frame (10).

3. Non-return air valve according to Claims 1 and 2, characterized in that the oblique grating (11) is arranged on the outer housing (3), the end face (12) of the peripheral frame (10) of the inner frame (4) and a closing-off region (13) of the oblique grating (11) forming the clamping means for the closing flap (5).

4. Non-return air valve according to Claim 3, characterized in that the end faces (12) of the peripheral frame (10) of the inner frame (4) have tenons (15) which are arranged at a distance from one another and which, in the installed state, pass through the edge region (16) of the closing flap (5) and are embedded in recesses (17) of the closing-off region (13) of the oblique grating (11) of the outer housing (3).

5. Non-return air valve according to Claims 1 to 3, characterized in that the outer housing (3) has a peripheral edge (14) having the clamping connection (18) for fastening to counterelements (19) of the peripheral edge (20) of the inner frame (4).

6. Non-return air valve according to one of the preceding claims, characterized in that the outer housing (3) has, adjacent to the peripheral edge (14), a peripheral wall (21), on which the oblique grating (11) is formed at the end.

7. Non-return valve according to Claims 1 and 6, characterized in that the top side of the peripheral wall (21) is provided with at least one spring tongue (22, 22'), directed towards the support (2), as a snap connection (6).

8. Non-return air valve according to Claim 7, characterized in that at least one spring tongue (22) is arranged in a pocket-like region (23) of the peripheral wall (21).

9. Non-return air valve according to one of the preceding claims, characterized in that the peripheral edge (14) of the outer housing (3) has a peripheral groove (24), directed towards the spring tongues (22), for receiving a foamed-in polyurethane gasket (25).

10. Non-return air valve according to Claim 1, characterized in that the spring tongue (22') is made separate from the outer housing (3).

11. Non-return air valve according to Claim 10, characterized in that the spring tongue (22') is arranged on a locking element (30) connectable to the outer housing (3).

12. Non-return air valve according to Claims 10 and 11, characterized in that the locking element (30) is guided on the outer face of the outer housing (30) via a dovetail guide (31).

13. Non-return air valve according to Claims 11 and 12, characterized in that the locking element (30) has an engagement edge (33) which engages behind a retaining face (32) of the outer housing (3) and which is arranged on the spring tongue (22').

14. Non-return air valve according to one of Claims 10 to 13, characterized in that the spring tongue (22') is located in the middle region of the locking element (30) between the faces of the dovetail guide (31).

## Revendications

1. Dispositif anti-retour d'air pour un dispositif de ventilation de l'intérieur d'un véhicule automobile, comprenant un logement externe (3) auquel est fixé un cadre interne (4) par au moins une liaison par serrage (18), au moins un volet de fermeture (5) constitué en un matériau flexible et mou étant disposé entre le logement externe (3) et le cadre interne (4) par un moyen de serrage, volet qui s'applique du fait de son propre poids contre une grille inclinée (11) et lorsqu'il y a un courant d'air contre des traverses (9), caractérisé en ce que le cadre interne (4) est introduit par son côté avant dans le logement externe (3) et en ce que l'ensemble constitué par le cadre interne (4), le logement externe (3) et les volets de fermeture (5) sont fixés sur un élément porteur (2) du véhicule automobile par au moins une liaison à enclenchement (6) constituée sur le logement externe (3).

2. Dispositif anti-retour d'air selon la revendication 1, caractérisé en ce que le cadre interne (4) comprend un pourtour périphérique (7) avec des nervures(8) orientées transversalement, sur lesquelles sont disposées les traverses (9) constituées de façon continue, les traverses (9) étant reliées les unes aux autres par un cadre périphérique (10).

3. Dispositif anti-retour d'air selon les revendications 1 et 2, caractérisé en ce que la grille inclinée (11) est disposée sur le logement externe (3), la surface frontale (12) du cadre périphérique (10) du cadre interne (4) et une région de fermeture (13) de la grille inclinée (11) formant le moyen de serrage pour le volet de fermeture (5).

4. Dispositif anti-retour d'air selon la revendication 3, caractérisé en ce que la surface frontale (12) du cadre périphérique (10) du cadre interne (4) comprend des tenons (15) disposés à distance les uns des autres, qui traversent à l'état monté la région de bord (16) du volet de fermeture (5) et qui sont disposés dans des évidements (17) de la région de fermeture (13) de la grille inclinée (11) du logement externe (3).

5. Dispositif anti-retour d'air selon les revendications 1 à 3, caractérisé en ce que le logement externe (3) comprend un bord périphérique (14) avec la liaison de serrage (18) pour sa fixation sur des contre-éléments (19) du cadre périphérique (20) du cadre interne (4).

6. Dispositif anti-retour d'air selon l'une quelconque des revendications précédentes, caractérisé en ce que le logement externe (3) comprend une paroi périphérique (21) se raccordant au bord périphérique (14), sur le côté d'extrémité de laquelle est formée la grille inclinée (11).

7. Dispositif anti-retour d'air selon les revendications 1 et 6, caractérisé en ce que le côté supérieur de la paroi périphérique (21) est muni d'au moins une languette élastique (22, 22') dirigée vers l'élément porteur (2) et constituant la liaison par enclenchement (6).

8. Dispositif anti-retour d'air selon la revendication 7, caractérisé en ce qu'au moins une languette élastique (22) est disposée dans une région en forme de poche (23) de la paroi périphérique (21).

9. Dispositif anti-retour d'air selon l'une quelconque des revendications précédentes, caractérisé en ce que le bord périphérique (14) du logement externe (3) comprend une rainure périphérique (24) dirigée vers les languettes élastiques (22) pour recevoir une garniture en PNU formée par moussage.

10. Dispositif anti-retour d'air selon la revendication 1, caractérisé en ce que la languette élastique (22') est séparée du logement externe (3).

11. Dispositif anti-retour d'air selon la revendication 10, caractérisé en ce que la languette élastique (22') est disposée sur un élément de verrouillage (30) pouvant être relié au logement externe (3).

12. Dispositif anti-retour d'air selon les revendications 10 et 11, caractérisé en ce que l'élément de verrouillage (30) est guidé par un dispositif de guidage en queue d'aronde (31) sur la surface externe du logement externe (30).

13. Dispositif anti-retour d'air selon les revendications 11 et 12, caractérisé en ce que l'élément de verrouillage (30) comprend un bord d'attaque (33) coopérant par l'arrière avec une surface d'arrêt (32) du logement externe (3), qui est constitué sur la languette élastique (22').

14. Dispositif anti-retour d'air selon l'une quelconque des revendications 10 à 13, caractérisé en ce que la languette élastique (22') est disposée dans le région centrale de l'élément de verrouillage (30) entre les surfaces du dispositif de guidage à queue d'aronde (31).
